# EUROPEAN PATENT APPLICATION

(11) **EP 1 898 080 A2**
(43) Date of publication of application: **12.03.2008**
(21) Application number: 07252272.5
(22) Date of filing: 06.06.2007
(51) Int. Cl.: F02K 7/10, F02K 7/14

(54) **Ramp injector system for combustor**

(30) Priority: 07.09.2006 US 517019
(71) Applicant: United Technologies Corporation, Hartford, CT 06101 (US)
(72) Inventor: Morrison, Calvin Q, Thousand Oaks CA 91362-2014 (US); Edelman, Raymond B., Woodland Hills CA 91364 (US)
(74) Representative: Leckey, David Herbert

(57) **Abstract**

A multi-height ramp injection system (12), for use in a supersonic propulsion system (16), comprises a plurality of multi-height ramp injectors (30, 32) for variably introducing a fuel into an airflow in a combustor. In one embodiment of the invention, the multi-height ramp injectors comprise a plurality of tall injectors (30A-30C) for fueling an inner portion of the airflow, and a plurality of short injectors (32A-32F) for fueling an outer portion of the airflow.

## Description

### BACKGROUND OF THE INVENTION

This invention relates generally to supersonic engines and more particularly to fuel injection systems for ramjet/scramjet propulsion systems. Air breathing ramjet engines typically propel vehicles to supersonic speeds above Mach 3, and air breathing scramjet engines typically propel vehicles to hypersonic speeds greater than about Mach 7. Air breathing ramjet/scramjet engines produce thrust by supersonically accelerating compressed air through a flow path. Cylindrical axi-symmetric scramjet engines are particularly useful for missile applications due to their circular or elliptical cross-sections, which decreases combustor weight and have sound structural integrity. The compressed air is directed into a combustion chamber where a fuel injection system delivers fuel to the compressed air whereby a combustible air-fuel mixture is produced. The air-fuel mixture is burned and then expanded through a nozzle to create thrust. To facilitate mixing and to optimize combustion of the air-fuel mixture, fuel injection systems attempt to distribute the fuel in a controlled manner within the combustor. Obtaining an ideal, uniform fuel distribution is very difficult.

A challenge to using axi-symmetric scramjet combustors is the difficulty in achieving efficient fuel penetration and air-fuel mixing, particularly in circular cross-sections. Typically, fuel injectors are placed around the periphery of the combustion chamber wall. However, distributing fuel to the inner regions of the combustion chamber is difficult with wall injectors since the fuel must be injected at very high pressures such that it is able to penetrate the airflow. Thus, pumps that have the capacity to generate large enough pressures to inject fuel into the center of the air stream are required. These pumps are typically large and heavy, which adds to the overall weight and complexity of the propulsion system. For example, sufficiently increasing the pressure of the fuel to reach the center of the airflow can result in a combination of over-fueling the inner regions or poor lateral fuel distribution. Thus, the fuel delivery must consider overall fueling requirements and the local fuel distribution and mixing. Thus, wall injectors provide significant design challenges in ramjet/scramjet propulsion systems.

Additionally, pop-in strut injectors have been used to fuel the center of the flow stream. Pop-in strut injectors are variably inserted into the center of the combustor to distribute fuel to the center of the airflow. Pop-in strut injectors require a hydraulic system to control actuators such that the injectors can be inserted and withdrawn from the air stream. Thus, pop-in strut injectors increase the size, weight, and overall complexity of the injector system, as well as creating thermal problems and sealing issues. For example, the propulsion system must be large enough to accommodate the pop-in struts when they are withdrawn from the combustor. Also, pop-in strut injectors must generally be sturdy enough to withstand the pressures of being interposed in the air stream. This also requires that pop-in strut injectors be well insulated or cooled to survive the heating produced by the airflow. Thus, there is a need for a ramjet/scramjet propulsion system having an improved fuel injection system.

### BRIEF SUMMARY OF THE INVENTION

From a first aspect, the present invention is directed toward a multi-height ramp injection and flameholding system for use in a supersonic propulsion system. The injection system comprises a plurality of multi-height ramp injectors for introducing a fuel into an airflow in a combustor. In one embodiment of the invention, the multi-height ramp injectors comprise a plurality of tall injectors for fueling an inner portion of the airflow, and a plurality of short injectors for fueling an outer portion of the airflow. Multiple height ramp injectors are included to optimize the fuel distribution pattern and mixing.

### BRIEF DESCRIPTION OF THE DRAWINGS

FIG. 1 shows a ramjet/scramjet vehicle in which the present invention is used.
FIG. 2 shows a supersonic propulsion system of the vehicle of FIG. 1 including a two-height embodiment of the multi-height ramp injection system of the present invention.
FIG. 3 shows cross section 3 - 3 of FIG. 2, illustrating the circumferential arrangement of multi-height ramp injectors.
FIG. 3A shows an embodiment of a ramp injector in which it is spirally wound along the wall of an isolator.
FIG. 4 shows cross section 4-4 of FIG. 2, illustrating the geometry of the multi-height ramp injectors.

### DETAILED DESCRIPTION

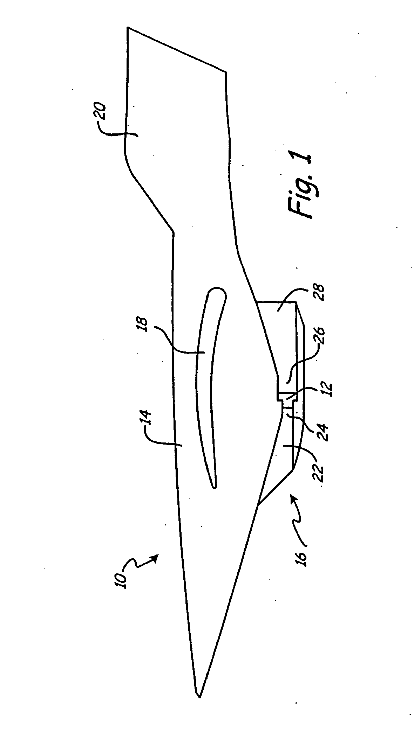

FIG. 1 shows ramjet/scramjet powered vehicle 10 in which injection system 12 of the present invention is used. Vehicle 10 includes fuselage 14, in which ramjet/scramjet propulsion system 16 is incorporated. Fuselage 14 includes structural components, such as wing 18 and tail fin 20, that lift vehicle 10 to flight when propelled at sufficient speeds by propulsion system 16. Vehicle 10 also includes other components required for controlling and propelling vehicle 10, such as flight control systems and fuel systems, which are not shown, but are well known in the aerospace industry. Propulsion system 16 includes inlet duct or nozzle 22, isolator 24, injection system 12, combustor 26 and exit nozzle 28. Propulsion system 16 acts to propel vehicle 10 at supersonic to hypersonic speeds utilizing ramjet and scramjet propulsion. In the embodiment shown, vehicle 10 comprises a reusable aircraft such as for transporting people and equipment. However, in other embodiments, vehicle 10 comprises a missile or rocket such as used for weaponry or launching objects into near-earth orbit.

Inlet nozzle 22 uses the forward movement of vehicle 10 to force air into system 16 utilizing a converging type inlet. In some embodiments, inlet nozzle 22 includes components for varying the cross sectional area of nozzle 22 such that the inlet airflow can be optimized.

Isolator 24 regulates the airflow as it enters injection system 12 and combustor 26. Specifically, during ramjet operation, isolator 24 prevents propagation of shockwaves upstream into the inlet airflow during injection of fuel into combustor 26, which can lead to engine unstart. Isolator 24 prevents a shock train from interacting with the inlet airflow by providing a near constant area buffer between inlet nozzle 22 and combustor 26.

Injection system 12 injects fuel into the air stream such that a controlled burning of the fuel can occur within combustor 26. The controlled burning of the fuel in combustor 26 is used to accelerate the air stream through exhaust nozzle 28.

Exhaust nozzle 28 further accelerates the airflow as it exits system 16 to produce thrust. In some embodiments, exhaust nozzle 28 includes components for varying the cross sectional area of nozzle 28 such that the thrust can be optimized.

Since propulsion system 16 is operable in both ramjet and scramjet modes, two very different flow patterns develop within propulsion system 16, particularly within combustor 26. Thus, in order to optimally inject fuel into the air stream during scramjet and ramjet operation such that the controlled burning is optimized and controlled thermal choking is achieved in ramjet operation, injection system 12 is incorporated in propulsion system 16. Injection system 12 comprises multi-height ramp injectors that optimally distribute fuel across the cross section of the airflow during ramjet and scramjet operation. The ramp injectors also provide enhanced turbulence and mixing through vortex generation as the flow spills over the edges of the ramps. The bluff bases of the ramps also provide augmented flame stabilization. Other embodiments of the injector system can include a variety of small tabulators added to the ramps to enhance the fine scale mixing to improve overall combustion efficiency.

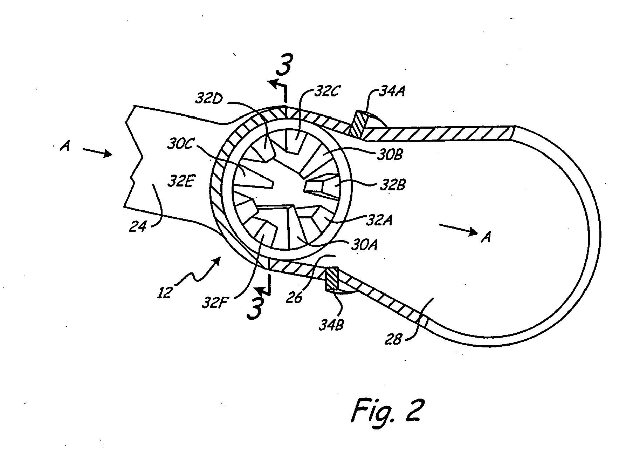

FIG. 2 shows a cutaway perspective view of propulsion system 16 of vehicle 10 from FIG. 1, including an example of a multi-height ramp injection system 12 of the present invention. The portion of propulsion system 16 shown in FIG. 2 includes isolator 24, injection system 12, combustor 26 and exhaust nozzle 28. Injection system 12 includes a first set of ramps, including ramps 30A - 30C, and a second set of ramps, including ramps 32A - 32F. During ramjet and scramjet operation, high pressure, high speed airflow *A* is forced into isolator 24 from inlet nozzle 22. During ramjet operation, airflow *A* enters combustor 26 at subsonic speeds, however, during scramjet operation, the velocity of airflow *A* can reach hypersonic speeds within combustor 26. As such, the mechanics of the combustion processes in combustor 26 varies considerably from ramjet to scramjet operation. For example, in ramjet operation, since the fuel is injected into a subsonic airflow, it is not feasible to supply the entire fuel requirement to combustor 26 at a single position along the length of combustor 26. The airflow can become over-pressured and thence choked. Therefore, staged injection, where fuel is introduced sequentially along the length of combustor 26 first with ramps 30A - 30C and then with injectors 34A and 34B as the air stream accelerates along the flow path, can be used during ramjet operation. In scramjet operation, however, the air stream is moving at such high velocities and energy levels that the possibility of a shock train migrating up the flow path is mitigated. It is, therefore, advantageous to supply all the fuel into the flow stream quickly such that the combustion process can be completed in as short as time possible, before exiting exhaust nozzle 28. Additionally, as will be explained in greater detail below, in each of the operational modes, it is necessary to precisely fuel inner and outer portions of airflow *A*. Thus, injection system 12 is provided with multi-height ramp injectors 30A - 30C and 32A - 32F. Multi-height ramp injectors 30A - 30C and 32A - 32F provide for controlled fueling of airstream *A* for the different operational modes of propulsion system 16, while reducing the size and weight of injection system 12, and increasing mixing efficiency.

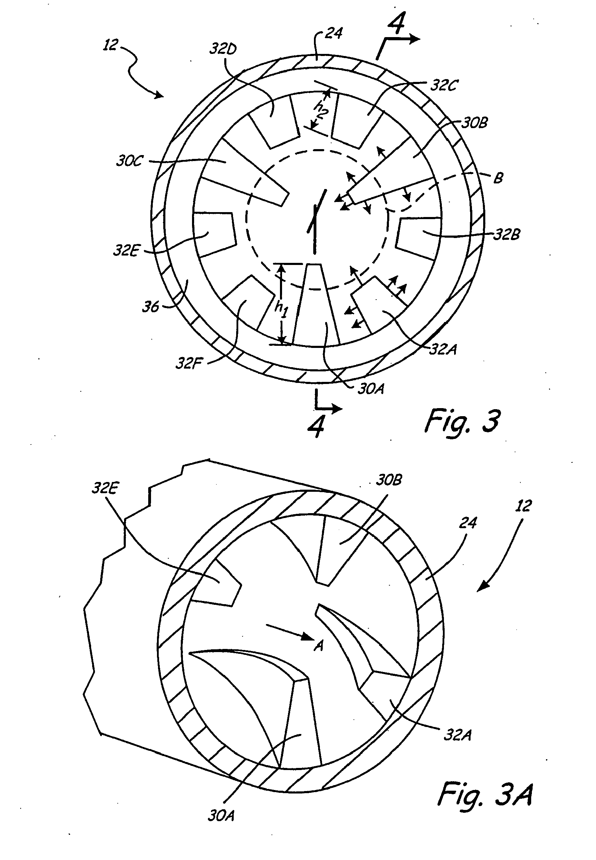

FIG. 3 shows cross section 3 - 3 of FIG. 2, illustrating the circumferential configuration of fuel injection system 12, including isolator 24, ramps 30A - 30B and ramps 32A - 32F. Ramps 30A - 30C and 32A - 32F are situated within injection system 12 at the downstream end of isolator 24, just before combustor 26. The downstream end of injection system 12 is joined with combustor 26 at step 36, which provides a drop-off to create turbulence in airflow *A* such that recirculating currents are formed in combustor 26. Ramps 30A - 30C and 32A - 32F are arranged around the circumference of injector system 12 near the downstream end of isolator 24 and extend radially toward the center of combustor 26. Multi-height ramp injection system 12 comprises a first set of injector ramps 30A - 30C, having a first height, *h₁,* and a second set of injector ramps 32A - 32F, having a second height, *h₂,* shorter than the first height. Injector nozzles or orifices are positioned on the side and top surfaces of ramps 30A - 30C and 32A - 32F so that fuel is injected into different portions of airflow *A,* as is indicated by the arrows on ramps 30B and 32A. Working together, the first and second sets of ramps act to uniformly inject fuel throughout the cross-sectional area of combustor 26. This configuration can also be used to create a controlled striated, non-uniform, fuel air mixture across the combustor in cases where the combustor operating conditions require a less the optimum fuel/air mixture.

Although FIG. 3 depicts injection system 12 and combustor 26 as having a circular cross section, other cross sections, such as elliptical cross sections, may be used. In yet other embodiments, the present invention may be used in and provide advantages to 2-D or rectangular cross section injection systems and combustors. In the embodiment shown, ramps 30A - 30C and 32A - 32F are configured for producing uniform fuel distribution in axi-symmetric combustor 26. In axi-symmetric, particularly round combustors, the bulk of the airflow volume is concentrated at the outer circumference of combustor 26 according to the r² relationship of the cross sectional area. Thus, more fuel is needed nearer the outer walls and less fuel is required toward the center of combustor 26. Conversely, in two-dimensional, or rectangular, combustors, the volume of airflow typically corresponds to the height of the flow path in a one-to-one relationship. Thus, less fuel is needed at the center of the airflow in axi-symmetric combustors where it is most difficult to deliver fuel or extend an injector. Thus, most of the fueling can take place toward the outer circumference of the combustor, where fuel is more easily delivered.

Ramps 30A - 30C are radially longer, or taller, than ramps 32A - 32F such that they reach further into the core of airstream *A*, or the center of combustor 26. Ramps 30A - 30C fuel the inner portion of airflow *A*, while ramps 32A - 32F are thus left to primarily fuel the outer portion of airflow *A*. In one embodiment, ramps 30A - 30B reach into the inner forty percent of airflow *A*, while ramps 32A - 32F remain within the outer sixty percent of airflow *A*, as indicated by dashed line *B*. Since less fuel is required within the core of airflow *A*, only a few tall ramps are necessary to deliver the required amount of fuel. Around the outer circumference of combustor 26, where more air flows, a plurality of short ramps, along with the lower portions of the tall ramps, distribute the required amount of fuel. The number of tall ramps typically depends on how large the inner cross sectional area is compared to the outer cross sectional area. In the embodiment of the invention shown, three tall ramps and six short ramps are used to fuel the inner forty percent and outer sixty percent, respectively. The number of tall and short ramps, however, can be varied, along with the number of fuel injection nozzles or orifices on each ramp, to control the fueling of the inner and outer portions of airflow *A.* Thus, for any configuration, the fuel distribution across airflow *A* can be controlled.

Shorter ramps are less susceptible to heat problems than the taller ramps because they have less surface area extending into the airflow. Thus, in axi-symmetric cross sections, the present invention is particularly advantageous because it reduces the amount of tall ramps extending into airflow *A*. Both tall ramps 30A - 30C and short ramps 32A - 32F, however, benefit from external cooling such that they are operable in the high heat environment of airflow *A*. The present invention, however, also has practical applications for two-dimensional (2-D) combustors. For example, by avoiding wall injectors, the multi-height ramp injectors of the present invention avoid producing flame near the combustor wall. This keeps the combustion process nearer the center of the combustor and away from the wall, which reduced cooling requirements for the combustor.

For any combustor cross section, the multi-height ramps increase the fuel penetration capability of injection system 12 such that the need for bulkier and more complex injectors is eliminated. The pressure at which the fuel is injected into airstream *A* is reduced as compared to previous designs. Since ramps 30A - 30C and 32A - 32F are elevated into airstream *A*, the fuel stream does not need to be injected at a pressure of a magnitude necessary to penetrate the entire radius of airstream *A*. Thus, the high pressure requirements of wall injectors are eliminated. Additionally, the use of bulky and complex strut-type or pop-in injectors is also eliminated. Thus, no additional components or hydraulic systems are necessary around the exterior of combustor 26. The multi-height ramp injectors of the present invention also have advantages over wall and pop-in strut injectors in that they are able to produce more turbulence in the airflow.

The profiles of ramps 30A - 30C and 32A - 32F are selected to produce turbulence in airflow *A* within combustor 26 such that the fuel delivered by ramps 30A - 30C and 32A - 32F is more efficiently mixed with airflow *A*. In the embodiment shown, ramps 30A - 30C and 32A- 32F have generally trapezoidal cross sections with their radially innermost tops narrower than their radially outermost bottoms. In other embodiments, other profiles such as rectangular, triangular or fir tree may be used. In addition, the ramps may be skewed relative to the axial flow direction to further reduce combustor length and enhance low loss mixing and flame stabilization. For example, the ramps may be curved or twisted relative to the axial flow direction along the wall of isolator 24 to generate a swirl component to the flow that can further enhance low loss mixing and flame stabilization. For illustrative purposes, FIG. 3A shows ramps 30A, 30B, 32A and 32E being spirally wound along the wall of isolator 24 in order to, among other things, contribute to turbulence production in airflow A. In FIG. 3A, ramps 30A, 30B, 32A and 32E spiral in the counterclockwise direction with respect to axial airflow A, as they extend upstream into isolator 24. In other embodiments, the ramps may be offset or slanted angled relative to the axial flow direction to reduce combustor length and enhance low loss mixing and flame stabilization.

The fuel injection nozzles or orifices located on ramps 30A - 30C and 32A - 32C can be positioned anywhere as required. For example, orifices are typically positioned along the tops and side, but could also be positioned on the downstream, bluff surface to optimally control the fueling of the flame stabilization regions. Also, multiple orifices can be used on each surface to optimally distribute the fuel to airflow *A.* For example, two side orifices may be used, and on tall ramps 30A - 30C, one orifice may be used to supply the inner airflow and one orifice may be used to supply the outer airflow. As the injected fuel enters airflow *A,* it is quickly introduced into turbulence produced by ramps 30A - 30C and 32A - 32F.

The downstream-most face of each ramp is generally blunt such that a sharp drop-off is produced in the downstream direction as airflow *A* flows past ramps 30A - 30C and 32A - 32F. Thus, dead space in airflow *A* is established and the airflow must circulate back to fill the dead space, thus producing flow separation and turbulence. The blunt based ramps act as flame holders by producing turbulence to increase the residence time of the fuel as it is burned in airflow *A*. This assists in propagating flame growth toward the inner diameter of airflow *A*. Thus, the turbulence within this flame holding region acts as an in situ ignition source to augment the core flow combustion process. In other embodiments of the invention, the profile of ramps 30A - 30C and 32A - 32F produces enough turbulence and inward flame propagation so that step 36 can be omitted, thus reducing the diameter of combustor 26.

The parameters of ramps 30A - 30C and 32A - 32F, including their number, height and profile, depends on the desired operational parameters of vehicle 10, such as the desired speed range, flight range, cruising speeds, etc., and can thus be varied accordingly. In various other embodiments, the profiles of ramps 30A - 30C and 32A - 32F can be adjusted depending on the desired mixing characteristics. The height of the ramps can be adjusted depending on the desired proportion of the airflow to be fueled by the first set of ramps and the second set of ramps. Also, the desired cruising speeds of vehicle 10 may determine how much of the speed range falls within ramjet or scramjet operation of propulsion system 16. For example, if vehicle 10 was intended to have a very narrow speed range, meaning its top speed is relatively close to its bottom speed, then the height of the taller ramps could be selected to optimize performance at the cruising speed.

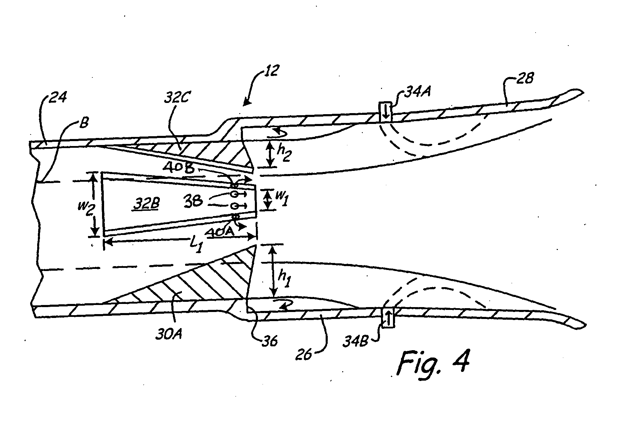

FIG. 4 shows cross section 4 - 4 of FIG. 2, illustrating the geometry of multi-height ramp injectors 30A, 32B and 32C (ramps 32A and 30B have been omitted for clarity) within fuel injection system 12. Multi-height ramp injectors 30A - 30C and 32A - 32C are positioned within isolator 24 just before combustor 26. Fuel injection system 12 includes injector ramps of differing heights such that the cross section of airflow *A* can be fueled in differing regions, such as during different operating modes of propulsion system 16.

At the upstream most end of ramps 30A - 30C and 32A - 32F, the ramps are generally flush with the wall of isolator 24. As the ramps extend downward, they gradually increase in height. Ramp 30A has height *h₁* such that it reaches into the inner forty percent of airflow *A*, as indicated by cut-off line *B*. Ramp 32C has height *h₂* such that it supplies fuel to the outer sixty percent of airflow *A*. The rate at which ramps 30A- 30C and 32A - 32F increase in height, or their rise, depends on the design requirements and can be varied accordingly. Low rise ramps produce less drag and therefore require less cooling. High rise ramps enable fueling of the inner portion of the airflow, but require more cooling. Fuel injection system 12 is shown having ramps of two heights, although, in other embodiments, ramps having three, four or more different heights can be used.

Ramps 30A - 30C and 32A - 32F are shown having a swept profile, meaning that the upstream portions that are flush with the wall of isolator 24 are wider than the downstream portions, at the height of the ramps. This shape helps to keep isolator 24 at a constant cross sectional area to reduce losses in pressure and to avoid mechanical choking. Both the profile of the ramps and the overall diameter of isolator 24 can be varied along their length to control flow through propulsion system 16 to, for example, avoid choking and control pressure losses. However, other shapes or profiles of ramps 30A - 30C and 32A - 32F are acceptable based on design parameters and acceptable pressure losses. The downstream face of ramps 30A - 30C and 32A - 32F are generally planar with step 36 of combustor 26 such that a blunt base is formed. Specifically, the bases of the downstream faces are typically flush with step 36, and the face itself is generally perpendicular to the center axis of combuster 26. The downstream face, however, can be inclined slightly downstream to assist in flame spreading across the combustor. The blunt base and inclined faces assist also in producing turbulence in airflow *A.*

During ramjet combustion within propulsion system 16, fuel must be injected into combustor 26 gradually along the length of combustor 26 in order to prevent choking. Thus, tall ramps, such as ramp 30A, are used to initially fuel airflow *A* at its center, within the inner forty percent indicated by line *B.* After combustion has started, and the fuel mass has moved far enough downstream to avoid choking, wall injectors 34A and 34B are used to fuel the outer portion of airflow *A*. Wall injectors 34A and 34B are positioned within combustor 26 at a point further downstream where the fuel they inject can intercept the combustion process, further increasing the velocity of airflow *A*. The tall ramps and wall injectors 34A and 34B supply fuel to airflow *A* such that the flow remains below the choke point. As such, propulsion system 16 can continually increase the velocity of airflow *A* to a speed sufficient for beginning scramjet operation.

During scramjet combustion within propulsion system 16, airflow *A* is moving sufficiently fast such that the possibility of choking the mass flow is avoided. As such, the fuel required for sustaining scramjet, or hypersonic, combustion can be injected into airflow *A* within a short length of combustor 26. Thus, both the tall and short ramp injectors are used to fuel airflow *A*. Tall injector ramps, such as ramp 30A, are used to fuel the inner area of airflow *A*, while short injector ramps, such as ramp 32C, are used to fuel the outer area of airflow *A*. Additionally, the lower portions of the tall injector ramps can be used to fuel the outer portions of airflow *A.* Since the inner portion of airflow *A* makes up a lesser portion of the total mass of airflow *A,* less injection is needed toward the center of airflow *A.* Typically, the central region of airflow *A* can be fueled using three tall ramps 30A - 30C. Additionally, since only a fractional amount of the mass of airflow *A* lies in the direct center of airflow *A*, injector ramps 30A - 30C need not extend up to the direct center to supply fuel there. The tall and short ramps are interdispersed with each other with the taller ramps being equally distributed around the circumference of isolator 24 such that the innermost portion of airflow *A* is well supplied. The outer portion of airflow *A* is adequately supplied with fuel using the shorter ramps and the lower portions of the taller ramps. Wall injectors 34A and 34B are not needed and shut off because they would be injecting fuel too far downstream for hypersonic combustion.

Injector nozzles or orifices are positioned on multi-height ramps 30A - 30C and 32A - 32F in any suitable manner such that fuel can be delivered to the necessary locations in airflow *A.* For example, orifices 38 are positioned on the top, or radially inward, surface of injector ramp 32B, and orifices 40A and 40B are positioned on the sides of injector ramp 32B. Orifices 38 fuel the radially inward portion of airflow *A,* while orifices 40A and 40B fuel the portions of airflow *A* between the ramps. In other embodiments, orifices can be positioned on the downstream surfaces of the ramps to directly fuel the recirculation zones produced by the ramps. Such injectors could be separately operated by secondary controllers to coordinate fuel injection. Fuel injection orifices 38, 40A and 40B thus need only be pressurized to penetrate a portion of airflow *A.* Tall ramps 30A - 30C need only penetrate the innermost forty percent, while short ramps 32A - 32F need only penetrate the outermost sixty percent. Thus, large, high pressure pumps can be eliminated from injection system 12.

Ramps 30A - 30C and 32A - 32F include internal hollow regions to accommodate components, such as cooling fluid and fuel lines, to bring fuel to orifices 38, 40A and 40B. Typically, orifices 38, 40A and 40B are positioned toward the downstream end of ramp 32B such that the injected fuel is rapidly introduced into turbulence produced by the presence of ramps 30A - 30C and 32A - 32F in airflow *A*.

The generally simple construction of ramps 30A - 30C and 32A - 32F make them easily scalable for different sized engines. Multi-height ramp injection system 12 includes no moving parts. Therefore, supplemental components need not be customized for each design of the system. Additionally, since the height of the ramps is being used to reach the innermost flow regions, problems associated with increasing pressure as scale increases are avoided. The shapes of the ramps, including profile, height, ramp rise, and swept profile, can be scaled up or down as necessary, and the parameters can be adjusted or coordinated to achieve optimal injection and mixing within different combustors.

Thus, multi-height ramp injection system 12 of the present invention achieves several advantages over previous injection system designs. For example, multi-height ramps 30A - 30C and 32A - 32F increase the turbulence in airflow *A* as compared to other designs. Thus, more efficient mixing and burning occurs during the combustion process and shorter, smaller propulsion systems can be designed. Also, multi-height ramp injection system 12 reduces the need for supplemental components, such as hydraulic actuators and high pressure pumps, such that the propulsion system can be reduced in overall size and weight. For example, since the multi-height ramps extend into the airflow, the need for increased fuel penetration and their associated pumps are eliminated.

Although the present invention has been described with reference to preferred embodiments, workers skilled in the art will recognize that changes may be made in form and detail without departing from the scope of the invention in its various aspects as defined by the following claims..

## Claims

1. A multi-height ramp injection system (12) for use in a supersonic propulsion system (16), the injection system comprising a plurality of multi-height ramp injectors (30, 32) for introducing fuel into an airflow in a combustor (26).

2. The multi-height ramp injection system of claim 1 wherein the plurality of multi-height ramp injectors include a first set of.injectors (30A, 30B, 30C) having a first height (h₁) and a second set of injectors (32A-32F) having a second height (h₂) shorter than the first height (h₁).

3. The multi-height ramp injection system of claim 2 wherein the first set of ramps comprises three tall ramps (30A-30C) and the second set of ramps comprises six short ramps (32A-32F) equally disposed between the three tall ramps.

4. The multi-height ramp injection system of claim 2 or 3 wherein the first set of injectors (30A-30C) fuel approximately an inner 40% of the airflow and the second set of injectors (32A-32F) fuel approximately an outer 60% of the airflow.

5. The multi-height ramp injection system of any preceding claim wherein the plurality of multi-height ramp injectors include a first set of ramps (30A-30C) extending toward a center of the airflow and a second set of ramps (30A-32F) extending toward the center of the airflow below the first set of ramps (30A-30C).

6. The multi-height ramp injection system of any preceding claim wherein the multi-height ramp injectors (30, 32) are for positioning within a combustor (26) having an axi-symmetrical cross-section.

7. The multi-height ramp injection system of any preceding claim wherein the multi-height ramp injectors (30, 32) produce a controlled fuel/air distribution across the airflow.

8. The multi-height ramp injection system of any preceding claim wherein the multi-height ramp injectors (30, 32) include a plurality of fuel injection orifices (38, 40).

9. The multi-height ramp injection system of claim 6 wherein the fuel injection orifices (38, 40) are positioned on top, side surfaces, and the base regions of the multi-height ramp injectors (30, 32).

10. The multi-height ramp injection system of any preceding claim wherein the multi-height ramp injectors (30, 32) include a blunt base for producing recirculating flows in the airflow.

11. The multi-height ramp injection system of claim 10 wherein the recirculating flows increase residence time of the fuel and air during a combustion process.

12. The multi-height ramp injection system of claim 10 or 11 wherein the recirculating flow provides flame stabilization and an in-situ ignition source to propagate flame spreading.

13. The multi-height ramp injection system of any preceding claim wherein the multi-height ramp injectors (30, 32) have a trapezoidal profile.

14. The multi-height ramp injection system of any preceding claim wherein the multi-height ramp injectors (30, 32) have a swept profile.

15. The multi-height ramp injection system of any preceding claim wherein the multi-height ramp injectors (30, 32) maintain an approximate equal cross sectional area of the combustor (26) along their length.

16. A supersonic propulsion system (16) comprising:
a combustor (26) where an air flow and a fuel are mixed and burned;
an air inlet for directing the air flow into the combustor (26);
a plurality of ramp injectors (30, 32) for introducing the fuel at various positions along a cross section of the airflow and for producing swirl in the air flow; and
an exhaust nozzle (28) for expanding the mixed and burned fuel and airflow to generate thrust.

17. The supersonic propulsion system of claim 16 wherein the combustor (26) has an axi-symmetrical cross-section.

18. The supersonic propulsion system of claim 16 or 17 wherein the plurality of ramp injectors (30-32) include a set of short ramp injectors (32A-32F) for fueling an outer cross-sectional area of the airflow and a set of tall ramp injectors (30A-30C) for fueling a central cross-sectional area of the airflow.

19. The supersonic propulsion system of claim 18 wherein the tall ramps (30A-30C) and short ramps (32A-32F) inject fuel into the airflow such that fuel is distributed to nearly the entire airflow.

20. The supersonic propulsion system of claim 18 or 19 wherein the number of tall ramps (30A-30C) to the number of short ramps (32A-32F) corresponds to the relative size of the inner cross sectional area to the outer cross sectional area.

21. The supersonic propulsion system of any of claims 16 to 20 wherein the plurality of ramp injectors (30, 32) produce turbulence in the airflow to increase mixing of the fuel in the airflow during combustion.

22. The supersonic propulsion system of any of claims 16 to 21 wherein the plurality of ramp injectors (30, 32) reduce mixing and burning time of the fuel and airflow.

23. The supersonic propulsion system of any of claims 16 to 22 wherein the plurality of ramp injectors (30, 32) comprise a generally planar downstream face to produce recirculating flow and enhanced turbulence in the airflow.

24. The supersonic propulsion system of any of claims 16 to 23 wherein the plurality of ramp injectors (30, 32) are skewed relative to the axial movement of the air flow to generate a swirl component to the air flow.

25. A multi-height ramp injector system (12) for use in a ramjet/scramjet engine comprising:
a plurality of tall injector ramps (30A-30C) for fueling an inner portion of an airflow; and
a plurality of short injector ramps (32A-32F) for fueling an outer portion of the airflow;
wherein during ramjet operation the tall ramps (30A-30C) fuel the inner portion of the airflow and during scramjet operation the tall and short ramps (30A-30C, 32A-32F) both operate to fuel the inner and outer portions of the flow.

26. The supersonic propulsion system of claim 25 wherein during ramjet operation a portion of the fuel is injected by the tall injector ramps (30A-30C) and a portion of the fuel in injected by a plurality of downstream wall injectors (34).
